# FASCICULE DE BREVET EUROPEEN

(11) **EP 2 723 808 B1**
(45) Date de publication et mention de la délivrance du brevet: **24.04.2019**
(21) Numéro de dépôt: 12725820.0
(22) Date de dépôt: 06.06.2012
(51) Int. Cl.: C08K 5/00, C08K 5/10, C08K 5/11, B32B 27/36, B32B 17/10, B32B 27/22

(54) **MATERIAU POLYMERE A BASE DE POLY(ACIDE LACTIQUE)**
POLYMERMATERIAL AUF DER BASIS VON POLY(MILCHSÄURE)
POLYMER MATERIAL BASED ON POLY(LACTIC ACID)

(30) Priorité: 23.06.2011 BE 201100380; 07.11.2011 EP 11188045
(43) Date de publication de la demande: 30.04.2014
(73) Titulaire: AGC Glass Europe, 1348 Louvain-la-Neuve (BE)
(72) Inventeur: DROPSIT, Sophie, F-64000 Béthune (FR); DUBOIS, Philippe, B-4260 Braives (BE); PATERNOSTRE, Laurent, B-7800 Ath (BE); RASE, François, B-6040 Jumet (BE); TALON, Olivier, F-76100 Rouen (FR)
(74) Mandataire: Chabou, Samia
(86) Numéro de dépôt international: PCT/EP2012/060732
(87) Numéro de publication internationale: WO 2012/175338

(56) Documents cités:
- EP-A1- 1 942 001
- DATABASE WPI Week 200622 Thomson Scientific, London, GB; AN 2006-207661 XP002663686, & JP 2006 063302 A (CI KASEI CO LTD) 9 mars 2006 (2006-03-09)
- NADIA LJUNGBERG ET AL: "Film Extrusion and Film Weldability of Poly(lactic acid) Plasticized with Triacetine and Tributyl Citrate", JOURNAL OF APPLIED POLYMER SCIENCE, JOHN WILEY & SONS, INC, US, vol. 88, no. 14, 1 janvier 2003 (2003-01-01), pages 3239-3247, XP002483925, ISSN: 0021-8995, DOI: 10.1002/APP.12106
- QUYNH ET AL: "Properties of crosslinked polylactides (PLLA & PDLA) by radiation and its biodegradability", EUROPEAN POLYMER JOURNAL, PERGAMON PRESS LTD. OXFORD, GB, vol. 43, no. 5, 1 mai 2007 (2007-05-01), pages 1779-1785, XP022055176, ISSN: 0014-3057, DOI: 10.1016/J.EURPOLYMJ.2007.03.007

## Description

La présente invention se rapporte au domaine des bio-polymères à base de dérivés de poly(acide lactique), biosourcés et biodégradables, et à leur utilisation dans le domaine verrier, en particulier en tant que film intercalaire dans des verres feuilletés.

Le poly(acide lactique) et polymère d'acide polylactique, terme utilisé dans les revendications, (PLA) est un polyester biosourcé et biodégradable bien connu.

Le PLA peut être obtenu par polymérisation par ouverture de cycle de lactide, lui-même obtenu par dépolymérisation contrôlée d'oligomères d'acide lactique issu, via des procédés chimiques et biotechnologiques, d'amidon de maïs ou de sucre de betterave, par exemple.

L'acide lactique constituant l'unité de base du PLA est une molécule chirale qui présente deux énantiomères L et D. Le taux de motifs de configuration opposée dans un PLA, c'est-à-dire de motifs D dans du PLLA ou de motifs L dans du PDLA, définit sa pureté optique. Un PLLA sera d'autant plus optiquement pur que son taux de motifs D sera faible. Nombre de propriétés des PLA sont directement ou indirectement liées à leur pureté optique, par exemple les PLA de haute pureté optique cristallisent plus aisément que le PLA de faible pureté optique.

Le PLA a fait l'objet d'intenses études et de modifications chimiques afin de le substituer avantageusement aux polymères issus de l'industrie pétrochimique lesquels posent des problèmes environnementaux et sont susceptibles d'engendrer une toxicité pour l'être humain. Parmi ceux-ci, on peut citer la lente dégradation de ces polymères et la toxicité des résidus issus de leur incinération que l'on retrouve dans la chaîne alimentaire.

Egalement, les PLA et les PLA modifiés sont préférés aux autres bio-polymères, tels que l'amidon ou les dérivés de la cellulose présentant des performances mécaniques moindres et des faibles résistances aux rayons UV.

Les applications des polymères PLA ou PLA modifiés sont principalement pour l'emballage alimentaire et dans le domaine médical (gants) pour lesquels on recherche des propriétés de transparence, de résistance à l'impact, à la chaleur et à l'humidité.

Dans le domaine verrier, le verre feuilleté est couramment utilisé comme verre de sécurité en architecture et également comme pare-brise dans les voitures et autres. Le film intercalaire entre deux feuilles de verre classiquement mis en oeuvre est un polymère de type EVA (éthylène-acétate de vinyle), polyuréthane ou PVB (poly(vinyl butyral)). Compte tenu des problèmes environnementaux engendrés par de tels polymères et de leurs coûts sans cesse croissants, il a été envisagé de les remplacer dans des laminés par des pellicules ou films de PLA ou PLA modifiés. Toutefois, il est nécessaire que ces derniers biopolymères présentent des propriétés thermo-mécaniques suffisantes pour répondre aux exigences de transparence dans le temps, de résistance mécanique, à savoir déformation élastique, température de transition vitreuse (Tg), élongation à la rupture, énergie d'impact et fragilité, et une bonne adhérence au verre.

Les films de PLA non modifié ne permettent pas d'atteindre ces objectifs du fait de leurs faibles flexibilité et propriétés adhésives à des températures inférieures à 60 °C d'une part et d'autre part parce qu'ils présentent à des températures supérieures à 60 °C des flexibilités indésirables rendant leurs usages limités.

Pour pallier ces inconvénients et pour obtenir les propriétés thermo-mécaniques voulues pour ces polymères, il a été proposé d'utiliser des grades de PLA caractérisés par une faible pureté optique, c'est-à-dire par un taux élevé de motifs D dans un PLLA ou, respectivement, de motifs L dans un PDLA. En effet, des études ont montré qu'une fraction de motifs D dans un PLLA ou, respectivement, de motifs L dans un PDLA, supérieure à 10% avait une influence bénéfique sur la cristallisation du PLA en la diminuant, ce qui évite la production de matériaux présentant une opacité indésirable.

Un autre moyen consiste en une plastification éventuellement couplée à une réticulation du PLA de base.

Ledit PLA de base ayant un module de Young élevé (environ 2500 MPa - ISO 527), mais en revanche présentant de faibles élongations à la rupture, de quelques pourcents, et une faible résistance à l'impact, il ne peut être utilisé en tant que tel par exemple dans des verres feuilletés pour restituer les performances du PVB. Cet inconvénient peut être évité, selon des modes de réalisation, par l'incorporation, dans le PLA de base, d'un plastifiant adéquat afin d'accroître la mobilité des chaînes de PLA, se traduisant par une baisse de Tg jusqu'à typiquement la température ambiante, et une augmentation de l'allongement à la rupture. Toutefois, le plastifiant choisi doit en outre être aisément miscible avec le PLA, présenter une stabilité dans la durée et ne pas exsuder hors du mélange. La nature, le taux d'incorporation ainsi que la masse moléculaire du plastifiant influence ces effets. Le choix du plastifiant réside donc dans un compromis entre les propriétés recherchées.

Généralement, les plastifiants convenables pour le PLA sont ceux de la classe chimique des triesters, tels que les citrates, les acétyl citrates et esters de glycérine, des poly(alkylènes éthers), tels que le polyéthylène glycol (PEG) et ses dérivés, des oligomères de lactide ou dérivés de l'acide lactique. Certaines études ont montré que les esters d'acides gras et les huiles époxydées peuvent également convenir, par exemple à base d'huile de soja, d'huile de palme ou d'huile de lin. Le taux incorporé dans le PLA varie entre 3 et 30% en poids.

En résumé, un plastifiant adéquat dans une composition de PLA permet une diminution conjointe de Tg, des températures de fusion et de cristallisation, entraînant celle du module de Young et de la contrainte à la rupture, mais également l'augmentation de l'élongation à la rupture.

La demande brevet KR 2008-0043041 divulgue une composition comprenant une résine PLA et un plastifiant choisi dans le groupe constitué par un acétyl monoglycéride, un dérivé citrate, tel que le tributyl citrate, et leur mélange. Ceci permet d'obtenir un PLA modifié présentant une résistance à l'impact et une élongation accrues et étant biocompatible. Toutefois, ce document ne mentionne pas une quelconque influence du taux relatif de motifs D-acide lactique ou L-acide lactique dans le PLA sur ces propriétés.

La demande US 2008/0213209 décrit des PLA réticulés et plastifiés par du colophane, qui est à base d'acides organiques de la famille des diterpènes appelés acides résiniques. Toutefois, une éventuelle influence de la pureté optique du PLA n'est pas indiquée.

La demande JP2006063302 divulgue un matériau polymère comprenant un polymère acide polylactique et un plastifiant. Le polymère acide polylactique comprends un polymère acide polylactique A1, ayant 7-20 % de motifs D et un autre polymère acide polylactique A2, ayant 0-6 % de motifs D. La teneur du plastifiant est de 20 % en poids.

La présence de plastifiant est donc nécessaire pour améliorer les propriétés du PLA, mais deux autres facteurs qui doivent être satisfaits quant à leurs propriétés recherchées sont la stabilité des compositions PLA/plastifiant, en évitant notamment l'exsudation du plastifiant, et l'absence de cristallisation du PLA car celle-ci induit une opacification voire également une augmentation de la rigidité du matériau, toutes deux indésirables. Or, la cristallisation pourrait se voir favorisée par l'abaissement de la Tg induite par l'ajout du plastifiant.

Afin de fournir un matériau PLA qui puisse avantageusement se substituer aux polymères issus de l'industrie pétrolière tout en présentant leurs propriétés mécaniques énumérées précédemment, le Demandeur a trouvé une nouvelle formulation de PLA plastifié qui surmonte également les inconvénients de l'art antérieur.

On décrit ici un matériau polymère comprenant un mélange d'un polymère d'acide polylactique (PLA) de base constitué de 60% à 85% en poids de motifs L et de 15% à 40% en poids de motifs D ou de 60% à 85% en poids motifs D et de 15% à 40% de motifs L, et d'un plastifiant choisi dans le groupe constitué par les esters d'acide citrique, les esters de glycérine et dérivés, les poly(alkylènes éthers), les oligomères de lactide ou dérivés de l'acide lactique, les esters d'acides gras et les huiles époxydées, dont la teneur est comprise entre 10% et 40% en poids, par rapport au poids total du matériau polymère.

Le Demandeur a orienté ses recherches vers des formulations permettant d'obtenir des propriétés physiques (Tg, module de Young, comportement en déformation) proches de celles des intercalaires que l'on peut trouver actuellement sur le marché des verres feuilletés (poly(vinyl butyral) - PVB), éthylène vinyle acétate (EVA), polyuréthane thermoplastique (TPU), résine ionomère,...), ce qui rend un film obtenu à partir de ce matériau très avantageusement utilisable comme film intermédiaire dans un verre feuilleté. Les propriétés d'intérêt sont en particulier :
- La Tg, qui est avantageusement comprise entre 0 °C et 35 °C, en particulier entre 5 °C et 25 °C, c'est-à-dire proche de la température ambiante,
- Un comportement en déformation présentant un caractère plastique ou élastique,
- Un module de Young (E) (mesuré selon ISO 527), compris entre 0,1 et 300 MPa; de préférence compris entre 1 et 300 MPa,
- Un allongement à la rupture (ε), avantageusement compris entre 50% et 800 %, de préférence entre 200% et 600%;
- Une contrainte à la rupture (σ), comprise entre 5 et 70 MPa, en particulier entre 15 et 50 MPa,
- La transparence, et
- La stabilité thermique ou au vieillissement.

Le Demandeur a montré que la nature chimique du plastifiant, son taux d'incorporation ainsi que sa masse moléculaire peuvent influer défavorablement sur les propriétés souhaitées pour le matériau polymère s'ils ne sont pas judicieusement choisis. Ainsi, il a été montré qu'il est préférable d'utiliser un taux d'incorporation ne dépassant pas 40%, de préférence ne dépassant pas 25%, pour éviter son exsudation hors du matériau, exsudation qui peut être également observée si les autres conditions ne sont pas respectées. Il doit également ne pas être volatil aux températures de fabrication du matériau. La préférence est donnée aux plastifiants de types dérivés d'acide citrique.

Avantageusement, le plastifiant est choisi dans le groupe constitué par les esters de l'acide citrique, les esters de glycérine, et les poly(alkylènes éthers), leurs dérivés correspondants et leurs mélanges. Il est bien entendu préférable que le plastifiant soit aussi biodégradable.

Les esters de l'acide citrique sont de préférence les dérivés alkyles de ces esters, tels que le triéthyl-citrate, n-tributyl-citrate (TbC), le n-hexyl-citrate, et les dérivés acétylés de ces esters, tels que l'acétyl-citrate, l'acétyl-triéthyl-citrate, l'acétyl-n-tributyl-citrate et l'acétyl-n-trihexyl-citrate.

Les esters de glycérine et leurs dérivés sont avantageusement les mono-, di-, tri-glycérides, ainsi que leurs dérivés acétylés et/ou alkylés et leurs mélanges, tel que le triacétate de glycéryle (TAC),

Les poly(alkylène éthers) sont de préférence le polyéthylène glycol (PEG) ou le polypropylène glycol (PPG) et leurs dérivés.

Les huiles époxydées peuvent également convenir, telles que l'huile de soja, l'huile de palme ou l'huile de lin.

Très avantageusement, les plastifiants sont les esters d'acides citriques, en particulier le n-tributyl-citrate (TbC), les esters de glycérol et leurs dérivés et mélanges respectifs.

De préférence, la teneur en plastifiant est comprise entre 15 et 30% en poids, de façon plus préférée entre 20 et 25% en poids, par rapport au poids total du polymère.

Les masses moléculaires moyennes en nombre (Mn) du PLA de base sont de préférence comprises entre 50000 et 200000, de façon plus préférée entre 70000 et 180000, avantageusement entre 70000 et 150000. Le Demandeur a montré que de tels Mn de PLA de base sont celles qui fournissent les meilleurs résultats en termes de propriétés recherchées. Les valeurs de Mn des PLA peuvent être mesurées par CES dont l'étalonnage en masses moléculaire est effectué avec des étalons de polystyrène (PS).

Les PLA de base qui peuvent être utilisés sont tout d'abord ceux disponibles dans le commerce.

A titre d'exemple, dans deux échantillons de PLA dont les taux de motifs D sont respectivement de 11% et 12,1%, ont été ajoutés des teneurs de TbC et TAC comprises entre 10 et 30%. Pour ces gammes de valeurs, la Tg est comprise entre 18 °C et 34 °C et ces valeurs de Tg restent globalement stables au cours d'essais de vieillissement supérieurs à 12 mois à température ambiante.

On peut également les synthétiser notamment à partir d'un mélange de monomères L-lactide et D-lactide avec un système de catalyseur/amorceur constitué d'un organo-étain, tel que l'éthylhexanoate d'étain, de triphénylphosphine et d'un alcool, tel que l'octanol, en présence d'un solvant organique de type phényle, tel que le toluène. Le mélange est chauffé à reflux à haute température, typiquement à 190 °C, pendant une durée de 0,5-1 h. Le lactide résiduel et les bas oligomères sont éliminés par précipitation dans le méthanol. La proportion de chaque monomère de L-lactide et D-lactide détermine le taux de motifs D dans le PLA de base.

Dans le matériau polymère, le PLA de base est constitué de 60% à 85% en poids de motifs L et de 15% à 40% en poids de motifs D ou de 60% à 85% en poids de motifs D et de 15% à 40% de motifs L, avantageusement de 15% et 30% de motifs L ou motifs D et, respectivement, de 70% à 85% en poids de motifs D ou motifs L. Un des aspects importants de l'invention réside dans la teneur relative de l'un des isomères par rapport à l'autre. C'est donc bien la proportion relative qui contribue aux effets recherchés. Ces taux permettent d'obtenir une bonne transparence du PLA par réduction de sa cristallinité. Le Demandeur a en outre montré, de manière surprenante, que le taux de plastifiant et le taux de motifs de configuration opposée doivent être dans les gammes susmentionnées, car, hors de celles-ci, l'effet technique recherché n'est pas atteint, notamment du fait de valeurs trop élevées de E (module de Young), typiquement supérieures à 300 MPa, ce qui se traduit par une rigidité inacceptable du matériau pour les applications voulues.

Par ailleurs, pour pallier les éventuels problèmes d'exsudation du plastifiant et atteindre les propriétés recherchées, telles que l'absence de cristallisation ou l'obtention d'un comportement de déformation de type élastique, de façon encore plus aisée, le PLA de base, dans le matériau polymère, est avantageusement modifié par réticulation de ses chaînes. Le matériau polymère, comprenant le PLA réticulé et le plastifiant ci-dessus, permet d'éviter notamment une totale exsudation du plastifiant hors du matériau ce qui en conserve la flexibilité. En outre, la modification du PLA de base par réticulation peut aussi permettre de réduire l'adhérence de contact du matériau polymère selon l'invention, notamment l'adhérence de contact des films à base du matériau polymère de l'invention, par exemple lorsqu'ils sont enroulés pour stockage ou transport.

Le réticulant des chaînes du PLA de base est habituellement choisi parmi les copolymères méthacryliques et acryliques, éventuellement comportant des fonctions glycidyles, tels que le joncryl (Formule c)); les dérivés d'isocyanurates, de préférence des dérivés allyliques, tel que les triallyl isocyanurates (TAIC - - Formule a)) ; les peroxydes organiques, tels que le peroxyde de dicumyle (DCP - Formule b)) ; et leurs mélanges, ou toute autre molécule multifonctionnelle susceptible de conduire, par réaction radicalaire le long de la chaîne du PLA ou par réaction avec les extrémités des chaînes de PLA, par exemple, à une réticulation partielle du PLA, ainsi que les mélanges des molécules citées ensemble ou avec d'autres molécules multifonctionnelles.

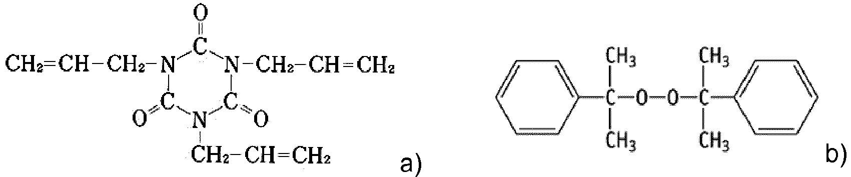

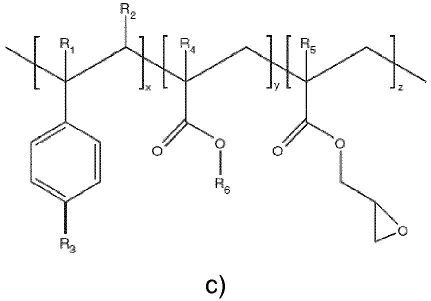

Dans le composé de formule c), R₁ à R₅ représentent de préférence, indépendamment, H ou un groupe alkyle en C₁-C₃ ou leur combinaison, R₆ représente de préférence un groupe alkyle en C₁-C₃, ; x, y et z sont compris entre 1 et 20. Un exemple d'un tel composé est disponible dans le commerce sous la dénomination Joncryl ADR 4368-CS provenant de chez BASF.

De préférence, la teneur en réticulant est d'au plus 5% en poids, par rapport au poids total du PLA modifié, et avantageusement située dans la plage 0,1%-5%, en particulier entre 0,5 et 4%.

La stabilité thermique du matériau polymère doit également être assurée, car la plastification et, le cas échéant, la réticulation sont effectuées à des températures supérieures à 150 °C, voire de l'ordre de 180 C-200°C, pour être effectives, dans un mélangeur interne ou malaxeur, ou bien dans une extrudeuse. La plastification et la réticulation peuvent être effectuées concomitamment, ou bien de manière séquencée.

On décrit ici également un film ou pellicule constitué d'un matériau polymère tel que défini ci-dessus.

De préférence, l'épaisseur du film est comprise entre 0,1 et 3 mm.

Pour la réalisation de ce film, le matériau polymère inclut avantageusement en plus, des additifs choisis dans le groupe constitué par les agents anti-blocking destinés notamment à réduire les phénomènes d'adhérence de contact, les agents stabilisants, notamment vis-vis des radiations UV, les agents absorbants (radiation UV et infra-rouge), les agents anti-statiques.

Les agents anti-blocking sont typiquement des composés qui empêchent l'adhérence de contact des films à base du matériau polymère de l'invention, notamment lorsqu'ils sont enroulés pour stockage ou transport. Ce sont typiquement le talc, la silice, le mica, le kaolin, pertite, wollastonite, le dioxyde de titane et les terres diatomées (par exemple le Kieselguhr) qui sont sous forme de poudre très finement broyée, ou des molécules organiques telles que les amides d'acide gras, par exemple un érucamide. On en ajoute typiquement afin que la teneur soit de 0,1 à 4% en poids par rapport au poids total du matériau polymère. Cet agent lorsqu'il est utilisé permet avantageusement de résoudre les problèmes d'adhérence de contact du film sur lui-même lors du stockage, par exemple en rouleau, tout en conservant la transparence du matériau polymère.

Les agents stabilisants sont utilisés pour éviter toute dégradation notamment oxydative ou thermo-oxydative du matériau polymère au cours de sa fabrication, si tel est le cas. Les agents sont ceux classiquement utilisés, tels que les dérivés de phosphites.

La préparation du matériau polymère est de préférence effectuée par mélange du PLA, du plastifiant et, selon les cas, de l'agent réticulant, à des températures supérieures à 150 °C, voire de l'ordre de 180°C-200°C, pour être effectives, dans un mélangeur interne ou malaxeur, par exemple de marque Brabender, ou bien encore par extrusion, selon des technologies et dispositifs connus. Le matériau est par exemple une résine sous forme de granulés. La réticulation est possible du fait de la température élevée, par exemple par génération des systèmes radicalaires aussi bien par le réticulant que par ceux du PLA, ce qui induit la réticulation.

Selon des modes de réalisation, lorsque l'étape de réticulation est mise en oeuvre, celle-ci est effectuée concomitamment à l'étape d'ajout de plastifiant. La plastification et la réticulation peuvent donc être effectuées concomitamment, ou bien de manière séquencée.

Tout comme les intercalaires utilisés actuellement dans les verres feuilletés, les films de ce matériau polymère peuvent être obtenus au moyen des méthodes bien connues dans le domaine technique de la fabrication de films plastiques, par exemple par extrusion cast, par extrusion soufflage de gaine ou encore par thermopressage.

Les paramètres thermo-mécaniques et avantages des matériaux polymères de l'invention sont caractérisés par les mesures et tests suivants.
- Les tests DMA (« Dynamic Mechanical Analysis ») selon les normes ASTM D4065, D4440 et D5279.. Ces tests sont effectués par montée en température de -40 °C à 170 °C à 3 °C/min, à 1 Hz et à 0,04% de déformation en mode tension des éprouvettes de 0.5 mm d'épaisseur.
- Les tests DSC (« Differential Scanning Calorimeter ») selon la norme ISO 11357 qui permettent de déterminer la Tg et de mettre en évidence l'absence des phénomènes indésirables de cristallisation. Ils sont effectués par montée en température de -40 °C à 220 °C à 10 °C/min ; refroidissement de 220 °C à - 40 °C à 20 °C/min ; isotherme de 2 minutes ; montée en température de -40 °C à 220 °C à 10 °C/min.
- Les tests de traction, selon la norme ISO 527, qui permettent de mesurer le Module de Young (E) l'allongement à la rupture (ε) et la contrainte à la rupture (σ) ont été effectués sur des éprouvettes découpées à l'emporte pièce dans des plaques thermopressées avec une vitesse de traverse de 10 mm/min.
- La Chromatographie d'Exclusion Stérique (CES) qui permet de déterminer les différentes masses moléculaires moyennes en nombre (Mn) et en poids (Mw), notamment pour les matériaux polymères de synthèse. Les étalons internes sont des polystyrènes.

On décrit ici également un substrat revêtu du film constitué essentiellement du matériau polymère de l'invention.

Dans le contexte de l'invention, le substrat représente, de préférence, un substrat verrier lequel est très avantageusement transparent, un substrat verrier transparent revêtu d'au moins une couche fonctionnelle, telle que couches anti-réfléchissantes, de faible émissivité (« Low-E »), de contrôle solaire, de barrière d'ions sodium et de neutralisation de couleurs en réflexion. Le substrat peut également représenter des miroirs, des substrats verriers revêtus de couches de laques pour des applications décoratives. Le substrat, de préférence transparent, peut être un matériau polymère à base de polycarbonate ou de poly(méthylméthacrylate).

L'invention concerne un assemblage feuilleté comprenant au moins deux substrats, lequel assemblage comporte, entre les au moins deux substrats, au moins un film intercalaire de matériau polymère résistant à l'impact et à la déchirure, comprenant un mélange (i) d'un polymère d'acide polylactique (PLA) de base constitué de 60% à 85% en poids de motifs L et de 15% à 40% en poids de motifs D ou de 60% à 85% en poids de motifs D et 15% à 40% de motifs L et (ii) d'un plastifiant, dont la teneur est comprise entre 10 et 40% en poids, par rapport au poids total du matériau polymère.

Grâce aux propriétés thermo-mécaniques de ce film, très voisines de celles du PVB notamment, il est possible de considérer notamment un verre feuilleté comme étant de qualité « vitrage de sécurité », c'est-à-dire pour lequel, en cas de bris du vitrage, les débris restent fixés sur le film et ne risquent donc pas de blesser les personnes le manipulant ou qui se retrouvent à proximité. De tels vitrages sont avantageusement utilisés comme pare-brise de voitures automobiles ou dans toute autre application connue.

De préférence, les plastifiants utilisés sont ceux précités.

Il est également avantageux d'incorporer au matériau polymère des réticulants et divers autres additifs, tels que ceux décrits précédemment, afin de mettre en oeuvre le film de l'invention et l'assemblage feuilleté le comprenant.

De préférence, au moins l'un des substrats de l'assemblage feuilleté est un substrat verrier. Le substrat verrier n'est pas limité en soi, et représente typiquement le verre sodocalcique floaté clair, extra clair, coloré, ou borosilicaté, lesquels sont transparents, dont les épaisseurs sont typiquement comprises entre environ 1 mm et 8 mm. Par verre extra-clair, on entend un verre comprenant une teneur maximale en fer, exprimé sous forme de Fe₂O₃, inférieure à 0,04% en poids, en particulier inférieure à 0,02% en poids. Par verre clair, on entend un verre comprenant une teneur maximale en fer, exprimé sous forme de Fe₂O₃, allant de 0,04 à 0,4% en poids. Il peut également s'agir de verre trempé ou durci.

Selon des modes de réalisation, au moins l'un des substrats de l'assemblage feuilleté est en polymère, typiquement de polycarbonate ou de poly(méthylméthacrylate). Selon d'autres modes de réalisation, l'un des substrats est un substrat verrier et l'autre est un substrat en polymère ci-dessus.

Il peut être envisagé d'utiliser ce film dans des verres feuilletés à base de trois substrats verriers, le film étant alors un intercalaire entre les trois substrats, le substrat intermédiaire comportant sur chacune de ses faces le film de l'invention.

Les faces extérieures des substrats verriers peuvent également comporter au moins un dépôt de couche fonctionnelle, telle que anti-réfléchissante, de faible émissivité, anti-salissure ou adaptée à des dispositifs photovoltaïques, telle que couches d'oxydes métalliques dopés (SnO₂ :F), de TiO₂, couches empêchant la migration des ions sodium à partir du verre, telles que couches d'oxycarbures, d'oxynitrures ou d'oxydes de silicium.

Les verres feuilletés sont fabriqués par des techniques connues en soi, notamment par analogie aux verres feuilletés à base de film PVB.

Les exemples qui suivent illustrent l'invention sans en limiter la portée.

### Exemples

Dans tous les exemples qui suivent, les matériaux polymères avec le PLA de base dans lesquels on incorpore des plastifiants, réticulant et autres additifs, sont préparés de la manière suivante.

Le PLA de base est introduit dans un mélangeur interne de marque Brabender (volume de la chambre de mélange = 55 cm³) à une température de 190 °C. Après un mélange de 5-10 min, le plastifiant est incorporé à des teneurs variant entre 10 et 40% en poids, par rapport au poids total du polymère PLA de base. L'ensemble est mélangé à cette température pendant 10 min pour obtenir un matériau polymère homogène. Celui-ci est ensuite thermopressé à 190°C sous pression de 130 bars pour obtenir des disques de 10 cm de diamètre et 0,5 mm d'épaisseur.

Les matériaux polymères qui incorporent, outre le plastifiant, un agent réticulant sont préparés de la manière suivante.

Préalablement à l'ajout du plastifiant et après introduction du PLA de base comme ci-dessus, on incorpore 3% en poids d'agents de réticulation (ou réticulants), respectivement le Joncryl ADR 4368-CS, provenant de BASF, et DCP. L'ensemble est mélangé pendant environ 5 min et on incorpore ensuite le plastifiant. Les étapes postérieures sont celles décrites plus haut. Dans le cas d'ajout de deux réticulants différents, on incorpore 1,5% en poids du premier réticulant et on mélange 5 min, et 1,5% du second réticulant suivi d'un mélange pendant 5 min.

La synthèse de PLA de base ayant un taux d'isomères PDLA compris entre 15% et 40% en poids s'effectue avec deux échantillons de lactides grade polymérisation, l'un étant un dimère d'acide lactique, isomères L, l'autre étant un mélange racémique de dimères d'acide lactique, isomères L et D. En fonction de la quantité respective en chaque échantillon, on obtient les teneurs variant entre 15 et 40% en poids de motifs D. On utilise un système de catalyseur/amorceur constitué d'éthylhexanoate d'étain, de triphénylphosphine et d'octanol, (Lactide/éthylhexanoate d'étain = 4500, lactide/octanol = 420, éthylhexanoate d'étain/triphénylphosphine = 1) en présence de toluène. Le mélange est chauffé à reflux à 190 °C, pendant 35 min. Le lactide résiduel et les bas oligomères sont éliminés par précipitation dans le méthanol, le PLA de base étant ensuite séché sous vide à 60 °C pour l'élimination totale du solvant.

Les PLA de base ayant un taux d'isomères PDLA inférieur à 15% ont été sélectionné parmi les grades commerciaux disponibles auprès de la société Natureworks. La proportion relative de L-lactide et de D-lactide détermine la pureté optique du PLA de base.

Pour chaque formulation mentionnée dans les exemples ci-dessous, les quantités d'additifs ajoutées sont exprimées en pourcentage en poids du total.

### Exemple 1

On considère une formulation d'acide polylactique (PLA) à laquelle a été ajoutée un plastifiant, le n-tri-butyl-citrate (TbC), dont la teneur est de 20% (Echantillon A). Il présente un taux de motifs D de 30%.

A titre de comparaison, on a considéré un Echantillon B caractérisé par un taux de motifs D de 12%, et comprenant un taux de TbC de 5%.

Le Tableau 1 reprend l'évolution de la Tg des formulations et des propriétés mécaniques ainsi obtenues.

A titre d'exemple, le Tableau 1 inclut également les valeurs de ces propriétés pour le PVB.

**Tableau 1**

| **Echantillon** | **%D** | **Plastifiant** | **Tg (°C)** | **E (MPa)** | **σ (MPa)** | **ε(%)** |
|---|---|---|---|---|---|---|
| A | 30 | 20% TbC | 15,9 | 25 | 18 | 419 |
| B (comparatif) | 12 | 5% TbC | 49,1 | 2362 | 46 | 33,4 |
| PVB | - | - | 18,8 | 3 | 30 | 460 |

Les résultats du Tableau 1 indiquent bien que la pureté optique du PLA et la teneur en plastifiant selon l'invention permet de réduire les Tg, et l'on observe que pour l'échantillon B (comparatif), dont la composition est hors invention, on a des valeurs trop élevées en termes de module de Young (E) et trop basses pour l'allongement à la rupture (ε).

### Exemple 2

On considère une formulation de poly(acide lactique) (PLA) à laquelle été ajoutée un plastifiant, le n-tri-butyl-citrate (TbC), le PLA de base ayant été réticulé (J = joncryl ADR 4368-CS).

Le Tableau 2 qui suit présente les caractéristiques des matériaux polymères : teneur en plastifiant, taux de motifs D, teneur en réticulant, ainsi que des données sur les propriétés mécaniques de ces matériaux.

**Tableau 2**

| **Echantillon** | **%D** | **Plastifiant** | **Réticulant** | **Tg (°C)** | **E (MPa)** | **σ (MPa)** | **ε (%)** |
|---|---|---|---|---|---|---|---|
| C | 30 | 20% TbC | 3% (J + DCP ; 50/50) | 11,9 | 3 | 8 | 500 |
| D | 20 | 20% TbC | 3% J | 15,3 | 56 | 16 | 350 |
| E | 30 | 15% TbC | 3% (J + DCP ; 50/50) | 21,1 | 2 | 10 | 620 |
| F | 20 | 17% TbC | 3% (J + DCP ; 50/50) | 21,7 | 15 | 16 | 400 |
| G (comparatif) | 12,1 | 5% TbC | 3% J | 48,2 | 2210 | 45 | 6 |

Les résultats du Tableau 2 indiquent que, pour les Echantillons C à F selon l'invention, les propriétés souhaitées pour ces matériaux sont obtenues au contraire de l'échantillon G, hors invention, pour lequel les propriétés ne sont pas satisfaisantes.

### Exemple 3

Les tests de vieillissement permettent de caractériser la stabilité des formulations produites. Une série d'éprouvettes de traction a ainsi été soumise à un vieillissement à 100 °C pendant une nuit et les propriétés thermomécaniques ont été réévaluées.

On considère une formulation de poly(acide lactique) (PLA) à laquelle a été ajoutée un plastifiant, le n-tri-butyl-citrate (TbC), le PLA de base ayant éventuellement été réticulé (J = joncryl ADR 4368-CS).

Le Tableau 3 qui suit présente les caractéristiques des matériaux polymères : teneur en plastifiant, taux motifs D, teneur en réticulant, ainsi que des données sur les propriétés mécaniques de ces matériaux avant et après l'étape de vieillissement (les valeurs après vieillissement sont données en italique) et renseigne également si un pic de fusion a été observé lors de la mesure par DSC, lequel témoigne de la présence d'une phase cristalline dans le matériau polymère.

**Tableau 3**

| **Echantillon** | **%PDLA** | **Plastifiant** | **Réticulant** | **Tg (°C)** | **E (MPa)** | **σ (MPa)** | **ε (%)** | **Phase cristalline** |
|---|---|---|---|---|---|---|---|---|
| A | 30 | 20% TbC | | 15,9 | 25 | 18 | 419 | Non |
| | | | | *9,2* | *11,5* | *8* | *500* | *Non* |
| C | 30 | 20% TbC | 3% (J + DCP ; 50/50) | 11,9 | 3 | 8 | 500 | Non |
| | | | | *16,4* | *4,8* | *5* | *420* | *Non* |
| H (comparatif) | 1,4 | 20% TbC | 3% DCP | 16 | 36 | 24 | 230 | Non |
| | | | | *24,6* | *810* | *28* | *12* | *Oui* |
| I (comparatif) | 12,1 | 20% TbC | | 18 | 45 | 29 | 430 | Non |
| | | | | *19* | *200* | *20* | *190* | *Oui* |
| J (comparatif) | 12,1 | 20% TbC | 3% J | 18,9 | 15 | 27 | 500 | Non |
| | | | | *20,7* | *70* | *28* | *350* | *Oui* |
| K (comparatif) | 12,1 | 20% TbC | 3% (DCP + TAlC ; 50/50) | 17 | 15 | 14 | 330 | Non |
| | | | | *24* | *187* | *10* | *37* | *Oui* |

Les échantillons A et C présentent des propriétés satisfaisantes avant et après vieillissement.

En revanche, pour les échantillons H à K, hors invention, on observe l'apparition d'une phase cristalline lors du vieillissement à haute température, qui engendre des propriétés thermomécaniques non satisfaisantes mais également une opacification du matériau ce qui le rend inapte pour les applications visées.

### Exemple 4

Des tests d'adhérence de contact ont été effectués sur des films de matériau polymère de plusieurs compositions différentes, incluant des agents anti-blocking ou non (pour comparaison). Le Kieselghur, commercialisé par Merck, présente une granulométrie inférieur à 0,1mm. Le type d'érucamide utilisé est un cis-13 docosenamide commercialisé par Sigma-Aldrich.

Ces tests sont effectués comme suit:
Deux films obtenus à partir des formulations décrites ont été mis en contact, lestés par une masse de 94 g puis placés dans une étuve à 30°C ou 60°C pendant 24 heures. Une fois retirés de l'étuve, on essaie de séparer les films. Si la séparation des films est possible (résultat OK), il n'y a pas de problème d'adhérence de contact ; si toutefois les films ne peuvent pas être séparés (résultat KO), le problème d'adhérence de contact est bien présent.

Le Tableau 4 qui suit présente les caractéristiques des matériaux polymères testés : taux de motifs D, teneur en plastifiant, teneur en réticulant, teneur en agent anti-blocking, ainsi que des données sur les propriétés mécaniques de ces matériaux avant et le cas échéant après l'étape de vieillissement (les valeurs après vieillissement sont données en italique) et donne les résultats des tests d'adhérence.

**Tableau 4**

| **Echan tillon** | **%D** | **Plasti fiant** | **Réti culant** | **Agent anti- blocking** | **Tg (°C)** | **E (MPa)** | **σ (MPa)** | **ε (%)** | **Test adhérence** |
|---|---|---|---|---|---|---|---|---|---|
| L₀ | 12 | 20% TbC | - | - | 17,8 | 45 | 28 | 430 | 60°C: KO |
| L₁ | 12 | 20% TbC | - | 2% Kieselguhr | 21,1 | 168 | 30 | 383 | 60°C: OK |
| L₂ | 12 | 20% TbC | - | 4% Kieselguhr | 20,2 | 180 | 29 | 321 | 60°C: OK |
| L₃ | 12 | 20% TbC | 3% DCP; 50/50) | Kieselguhr | 20,6 | 15 | 15 | 282 | 60°C: OK |
| M₀ | 12 | 20% TbC | - | - | 16,2 | 14 | 26 | 420 | 30°C: KO |
| M₁ | 12 | 20% TbC | - | 0.5% Erucamide | 20,2 | 24 | 25 | 521 | 30°C: OK |
| M₂ | 12 | 20% TbC | 3% (J + DCP ; 50/50) | 0.5% Erucamide | 21,5 | 15 | 15 | 326 | 30°C: OK |
| N₁ | 30 | 20% TbC | - | 0.5% Erucamide | 17,2 | 3 | 5 | 465 | 30°C: KO |
| | | | | | *15,6* | *32* | *10* | *390* | |
| N₂ | 30 | 20% TbC | 3% J | 0.5% Erucamide | 9 | 3 | 3 | 515 | 30°C: OK |
| | | | | | *15,4* | *7* | *7* | *495* | |
| N₃ | 30 | 20% TbC | 1,5% J + 0,5% DCP | 0.5% Erucamide | 16,4 | 3 | 7 | 500 | 30°C: OK |
| | | | | | *17,3* | *10* | *9* | *460* | |

Les résultats de ce tableau montrent de manière générale l'avantage à ajouter du Kieselguhr ou de l'érucamide dans un matériau polymère comprenant un polymère d'acide polylactique (PLA), un plastifiant, et éventuellement un réticulant, pour permettre de réduire l'adhérence de contact du matériau polymère.

Le groupe d'échantillons N montre que, dans le cas d'un ajout de 0.5% d'Erucamide, cet avantage de réduction d'adhérence de contact est observable, pour les PLA à haut taux de D, principalement quand un réticulant est également présent dans le matériau polymère.

## Revendications

1. Assemblage feuilleté comprenant au moins deux substrats, lequel assemblage comporte, entre les au moins deux substrats, au moins un film intercalaire de matériau polymère résistant à l'impact et à la déchirure, comprenant un mélange (i) d'un polymère d'acide polylactique (PLA) de base constitué de 60% à 85% en poids de motifs L et de 15% à 40% en poids de motifs D ou de 60% à 85% en poids de motifs D et 15% à 40% de motifs L et (ii) d'un plastifiant, dont la teneur est comprise entre 10 et 40% en poids, par rapport au poids total du matériau polymère.

2. Assemblage feuilleté selon la revendication 1, dans lequel le plastifiant est choisi parmi les esters-alkyles d'acide citrique, en particulier le n-tributyl-citrate (TbC).

3. Assemblage feuilleté selon la revendication 1 ou 2, dans lequel le plastifiant est choisi parmi les esters de glycérine et leurs mono-, di-, tri-glycérides dérivés, ainsi que leurs dérivés acétylés et/ou alkylés et leurs mélanges, tel que le triacétate de glycéryle (TAC).

4. Assemblage feuilleté selon l'une des revendications 1 à 3, dans lequel la teneur en plastifiant est comprise entre 15 et 30% en poids, de façon plus préférée entre 20% et 25% en poids, par rapport au poids total du matériau polymère.

5. Assemblage feuilleté selon l'une des revendications 1 à 4, dans lequel le polymère d'acide polylactique (PLA) de base est constitué de 15% à 30% de motifs L ou D et, respectivement, de 70% à 85% en poids de motifs D ou L.

6. Assemblage feuilleté selon l'une des revendications 1 à 5, dans lequel le PLA de base est modifié par réticulation de ses chaînes au moyen d'un réticulant.

7. Assemblage feuilleté selon la revendication 6, dans lequel le réticulant des chaînes du PLA de base est choisi parmi les copolymères méthacryliques et acryliques, éventuellement comportant des fonctions glycidyles, tels que le joncryl ; les dérivés d'isocyanurates, de préférence des dérivés allyliques, tel que les triallyl isocyanurates (TAIC) ; les peroxydes organiques, tels que le peroxyde de dicumyle (DCP) ; et leurs mélanges.

8. Assemblage feuilleté selon la revendication 6 ou 7, dans lequel la teneur en réticulant est d'au plus 5% en poids, par rapport au poids total du PLA modifié, et avantageusement située dans la plage 0,1%-5%, en particulier entre 0,5 et 4%.

9. Assemblage feuilleté selon l'une des revendications 1 à 8, comprenant en outre un agent anti-blocking, de préférence choisi parmi les terres diatomées et les acides d'amides gras, en particulier l'érucamide.

10. Assemblage feuilleté selon l'une des revendications 1 à 9, dans lequel au moins l'un des substrats est un substrat verrier.

## Patentansprüche

1. Laminierte Anordnung, umfassend mindestens zwei Substrate, wobei die Anordnung eingefügt zwischen den mindestens zwei Substraten mindestens einen Zwischenfilm aus schlag- und reißfestem Polymermaterial umfasst, umfassend eine Mischung (i) aus einem Basis-Polymilchsäure(PLA)-Polymer, bestehend aus 60 Gew.-% bis 85 Gew.-% der Struktureinheiten L und 15 Gew.-% bis 40 Gew.-% der Struktureinheiten D oder 60 Gew.-% bis 85 Gew.-% der Struktureinheiten D und 15 % bis 40 % der Struktureinheiten L und (ii) einem Weichmacher, dessen Anteil im Bereich zwischen 10 und 40 Gew.-% liegt, bezogen auf das Gesamtgewicht des Polymermaterials.

2. Laminierte Anordnung nach Anspruch 1, wobei der Weichmacher ausgewählt ist aus den Alkylestern der Citronensäure, insbesondere n-Tributylcitrat (TbC).

3. Laminierte Anordnung nach Anspruch 1 oder 2, wobei der Weichmacher ausgewählt ist aus den Glycerinestern und davon abgeleiteten Mono-, Di-, Triglyceriden sowie deren acetylierten und/oder alkylierten Derivaten und Mischungen davon, wie etwa Glyceryltriacetat (TAC).

4. Laminierte Anordnung nach einem der Ansprüche 1 bis 3, wobei der Anteil an Weichmacher im Bereich zwischen 15 und 30 Gew.-%, bevorzugter zwischen 20 Gew.-% und 25 Gew.-% liegt, bezogen auf das Gesamtgewicht des Polymermaterials.

5. Laminierte Anordnung nach einem der Ansprüche 1 bis 4, wobei das Basis-Polymilchsäure(PLA)-Polymer aus 15 Gew.-% bis 30 Gew.-% der Struktureinheiten L oder D bzw. 70 Gew.-% bis 85 Gew.-% der Struktureinheiten D oder L besteht.

6. Laminierte Anordnung nach einem der Ansprüche 1 bis 5, wobei die Basis-PLA durch Vernetzung ihrer Ketten mittels eines Vernetzungsmittels modifiziert ist.

7. Laminierte Anordnung nach Anspruch 6, wobei das Vernetzungsmittel der Ketten der Basis-PLA ausgewählt ist aus den Methacryl- und Acrylcopolymeren, die gegebenenfalls Glycidylfunktionen umfassen, wie etwa Joncryl; Isocyanatderivaten, vorzugsweise Allylderivaten, wie etwa Triallylisocyanuraten (TAIC); organischen Peroxiden, wie etwa Dicumylperoxid (DCP); und Mischungen davon.

8. Laminierte Anordnung nach Anspruch 6 oder 7, wobei der Anteil an Vernetzungsmittel höchstens 5 Gew.-% beträgt, bezogen auf das Gesamtgewicht der modifizierten PLA, und vorteilhafterweise im Bereich zwischen 0,1 %-5 %, insbesondere zwischen 0,5 und 4 % liegt.

9. Laminierte Anordnung nach einem der Ansprüche 1 bis 8, umfassend ferner ein Antiblockiermittel, vorzugsweise ausgewählt aus Diatomeenerde und Säuren von Fettamiden, insbesondere Erucamid.

10. Laminierte Anordnung nach einem der Ansprüche 1 bis 9, wobei mindestens eines der Substrate ein Glassubstrat ist.

## Claims

1. Laminated assembly comprising at least two substrates, which assembly comprises, between the at least two substrates, at least one interlayer film of impact-resistant and tear-resistant polymer material, comprising a mixture (i) of a base polylactic acid (PLA) polymer formed of 60% to 85% by weight of L units and of 15% to 40% by weight of D units or of 60% to 85% by weight of D units and 15% to 40% of L units and (ii) of a plasticizer, the content of which is between 10% and 40% by weight, with respect to the total weight of the polymer material.

2. Laminated assembly according to Claim 1, in which the plasticizer is chosen from alkyl esters of citric acid, in particular tri(n-butyl) citrate (TbC) .

3. Laminated assembly according to Claim 1 or 2, in which the plasticizer is chosen from glycerol esters and their derived mono-, di- or triglycerides, and also their acetylated and/or alkylated derivatives and their mixtures, such as glyceryl triacetate (GTA) .

4. Laminated assembly according to one of Claims 1 to 3, in which the content of plasticizer is between 15% and 30% by weight, more preferably between 20% and 25% by weight, with respect to the total weight of the polymer material.

5. Laminated assembly according to one of Claims 1 to 4, in which the base polylactic acid (PLA) polymer is formed of 15% to 30% of L or D units and, respectively, of 70% to 85% by weight of D or L units.

6. Laminated assembly according to one of Claims 1 to 5, in which the base PLA is modified by crosslinking of its chains by means of a crosslinking agent.

7. Laminated assembly according to Claim 6, in which the crosslinking agent for the base PLA chains is chosen from methacrylic and acrylic copolymers, optionally comprising glycidyl functional groups, such as joncryl; isocyanurate derivatives, preferably allyl derivatives, such as triallyl isocyanurates (TAIC); organic peroxides, such as dicumyl peroxide (DCP); and their mixtures.

8. Laminated assembly according to Claim 6 or 7, in which the content of crosslinking agent is at most 5% by weight, with respect to the total weight of the modified PLA, and advantageously lies in the range 0.1%-5%, in particular between 0.5% and 4%.

9. Laminated assembly according to one of Claims 1 to 8, additionally comprising an antiblocking agent, preferably chosen from diatomaceous earths and acids of fatty amides, in particular erucamide.

10. Laminated assembly according to one of Claims 1 to 9, in which at least one of the substrates is a glass substrate.
